# EUROPEAN PATENT APPLICATION

(11) **EP 4 607 762 A1**
(43) Date of publication of application: **27.08.2025**
(21) Application number: 22962653.6
(22) Date of filing: 17.10.2022
(51) Int. Cl.: H02K 1/276

(54) **EMBEDDED MAGNET ROTOR AND EMBEDDED MAGNET ROTATING ELECTRIC MACHINE**

(71) Applicant: Kabushiki Kaisha Toshiba, Minato-ku Tokyo (JP)
(72) Inventor: MATSUBARA, Masakatsu, Kawasaki-shi, Kanagawa 212-8585 (JP); MORI, Daisuke, Kawasaki-shi, Kanagawa 212-8585 (JP); SASAKI, Naoya, Kawasaki-shi, Kanagawa 212-8585 (JP); KANO, Masaru, Kawasaki-shi, Kanagawa 212-8585 (JP)
(74) Representative: AWA Sweden AB
(86) International application number: PCT/JP2022/038531
(87) International publication number: WO 2024/084541

(57) **Abstract**

According to an embodiment, an interior permanent-magnet rotor (10) includes: a rotor shaft; permanent magnets at least one of which is provided at each magnetic pole; and a rotor core (100) attached to a radially outer side of the rotor shaft and formed with permanent magnet housing holes (110) for storing the permanent magnets, respectively. Each of the permanent magnet housing holes has an opening part (114) in communication with a radially outer side of the rotor core and sandwiched between an opening-part circumferentially inner-side tip (112) and an opening-part circumferentially outer-side tip (113) of the rotor core. The rotor core (100) has a relaxing part (120) formed with shapes of the opening-part circumferentially inner-side tip (112) and the opening-part circumferentially outer-side tip (113).

## Description

### FIELD

Embodiments of the present invention relate to an interior permanent-magnet rotor and an interior permanent-magnet rotating electric machine equipped therewith.

### BACKGROUND

To achieve a low-carbon/decarbonized society, electrically-powered vehicles such as hybrid electric vehicles (HEV) and electric vehicles (EV) are coming into wide use. As power sources for these, permanent magnet motors are typically used. Because the permanent magnet motors are excellent in variable-speed operation characteristics, for example, a configuration in which two permanent magnets are arranged facing in the circumferential direction at each magnetic pole and opening toward the radially outer side is proposed and used. Note that a case where the two permanent magnets have the same specifications and are arranged at positions symmetric with respect to a center (d axis) of the magnetic poles is called a so-called V-shape arrangement.

In the interior permanent-magnet rotor, there is a case where a permanent magnet housing hole of the rotor core which stores the permanent magnet and forms a flux barrier does not communicate with the outside of the rotor core, that is, there is a system in which a top bridge being a bridge between the permanent magnet housing hole and the outer surface of the rotor core, namely, on the outer circumferential side exists in order to mechanically support the centrifugal force acting on the iron core on the outer diameter side and the permanent magnet.

However, in the case where the top bridge exists, this becomes a magnetic path to cause a leakage flux, and becomes a factor causing a decrease in torque performance.

Therefore, a top bridgeless system is known in which the top bridge is not provided and an opening part through which a permanent magnet housing hole of the rotor core communicates with the outside of the rotor core is provided.

### PRIOR ART DOCUMENT

### PATENT DOCUMENT

Patent Document 1: Japanese Laid-open Patent Publication No. 2020-014322

### SUMMARY OF THE INVENTION

### PROBLEMS TO BE SOLVED BY THE INVENTION

In the top bridgeless system, the opening part is provided at the outer surface of the rotor core. Therefore, the magnetic reluctance to the magnetic flux penetrating into the rotor from the stator rapidly changes between a portion with the iron core and a portion without the iron core near the rotor outer circumferential surface, namely, the opening part and a part having the iron core, to cause cogging torque, resulting in a problem of generating noise accompanying the cogging torque.

An object of the present invention is to provide an interior permanent-magnet rotor and an interior permanent-magnet rotating electric machine capable of decreasing the change in magnetic reluctance to reduce cogging torque.

### MEANS FOR SOLVING THE PROBLEMS

To achieve the above object, an interior permanent-magnet rotor according to an embodiment of the present invention includes: an interior permanent-magnet rotor comprising: a rotor shaft extending in a direction of a rotation axis; a plurality of permanent magnets at least one of which is provided at each magnetic pole; and a rotor core attached to a radially outer side of the rotor shaft and formed with a plurality of permanent magnet housing holes for storing the plurality of permanent magnets, respectively, wherein: each of the permanent magnet housing holes has an opening part in communication with a radially outer side of the rotor core and sandwiched between an opening-part circumferentially inner-side tip and an opening-part circumferentially outer-side tip of the rotor core; and the rotor core has a relaxing part formed with shapes of the opening-part circumferentially inner-side tip and the opening-part circumferentially outer-side tip to relax a rapid change in a circumferential direction in magnetic reluctance with respect to a magnetic flux penetrating into the rotor core from the radially outer side of the rotor core.

### BRIEF DESCRIPTION OF THE DRAWINGS

Fig. 1 is a transverse sectional view illustrating a configuration of an interior permanent-magnet rotating electric machine according to a first embodiment
Fig. 2 is a partial transverse sectional view of a rotor core illustrating a permanent magnet housing hole of an interior permanent-magnet rotor according to the first embodiment
Fig. 3 is a partial transverse sectional view illustrating a relaxing part of the permanent magnet housing hole of the interior permanent-magnet rotor according to the first embodiment
Fig. 4 is a graph illustrating the comparison of temporal changes in magnetic flux density showing the effect of the interior permanent-magnet rotor according to the first embodiment
Fig. 5 is a graph illustrating the comparison of details of the temporal changes in magnetic flux density showing the effect of the interior permanent-magnet rotor according to the first embodiment
Fig. 6 is a graph illustrating the comparison of temporal changes in torque showing the effect of the interior permanent-magnet rotor according to the first embodiment
Fig. 7 is a graph illustrating the comparison of magnitudes of torque showing the effect of the interior permanent-magnet rotor according to the first embodiment
Fig. 8 is a graph illustrating the comparison of magnitudes of a cogging torque harmonic component showing the effect of the interior permanent-magnet rotor according to the first embodiment
Fig. 9 is a graph illustrating the comparison of magnitudes of an iron loss showing the effect of the interior permanent-magnet rotor according to the first embodiment
Fig. 10 is a partial transverse sectional view illustrating a relaxing part of the permanent magnet housing hole of the interior permanent-magnet rotor according to a second embodiment
Fig. 11 is a partial transverse sectional view illustrating a relaxing part of the permanent magnet housing hole of the interior permanent-magnet rotor according to a third embodiment
Fig. 12 is a partial transverse sectional view illustrating a relaxing part of the permanent magnet housing hole of the interior permanent-magnet rotor according to a

### fourth embodiment

### DETAILED DESCRIPTION

Hereinafter, an interior permanent-magnet rotor and an interior permanent-magnet rotating electric machine according to embodiments of the present invention will be explained with reference to the drawings. Here, portions which are identical or similar to each other are denoted by common reference signs and duplicate explanations are omitted.

### [First Embodiment]

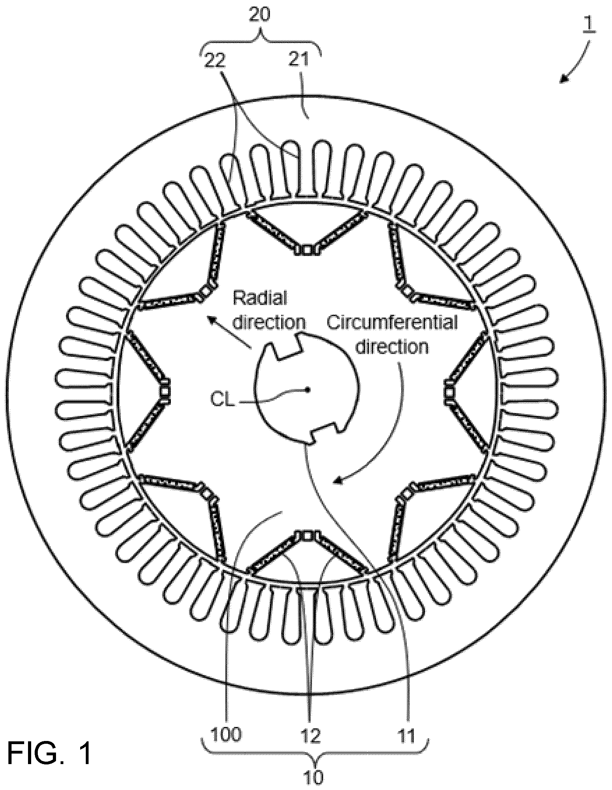

Fig. 1 is a transverse sectional view illustrating a configuration of an interior permanent-magnet rotating electric machine 1 according to a first embodiment.

The interior permanent-magnet rotating electric machine 1 has an interior permanent-magnet rotor 10 and a stator 20.

The interior permanent-magnet rotor 10 has a rotor shaft 11 extending in a direction of a rotation axis CL and rotatably supported by not-illustrated two bearings, a cylindrical rotor core 100 attached to a radially outer side of the rotor shaft 11, and a plurality of permanent magnets 12 arranged in the rotor core 100.

The stator 20 has a cylindrical stator core 21 arranged to surround a radially outer side of the rotor core 100, and a not-illustrated stator winding passing through the inside of a plurality of stator slots 22 formed on an inner circumferential surface of the stator core 21 and wound around the stator core 21.

Here, directions are defined for convenience of explanation. A direction away from the rotation axis CL of the rotor shaft 11 is called a radial direction. Besides, a direction in which the interior permanent-magnet rotor 10 rotates is called a circumferential direction. Besides, a direction parallel to the direction in which the rotation axis CL extends is called an axial direction.

Two permanent magnets 12 are arranged at each magnetic pole, and arranged at positions symmetric with each other in the circumferential direction with respect to a magnetic pole center axis. The two permanent magnets 12 at each magnetic pole are arranged to have an interval in the circumferential direction which becomes wider toward the radially outer side. In other words, the two permanent magnets 12 at each magnetic pole are arranged to open toward the radially outer side.

Though the above case will be explained as an example below, the interior permanent-magnet rotor 10 is not limited to the case having the above-explained arrangement of the magnets. In other words, the number of permanent magnets 12 arranged at each magnetic pole is not limited to two. Further, the permanent magnets 12 are not limited to be symmetric with respect to the center axis of the magnetic pole, but may be asymmetric.

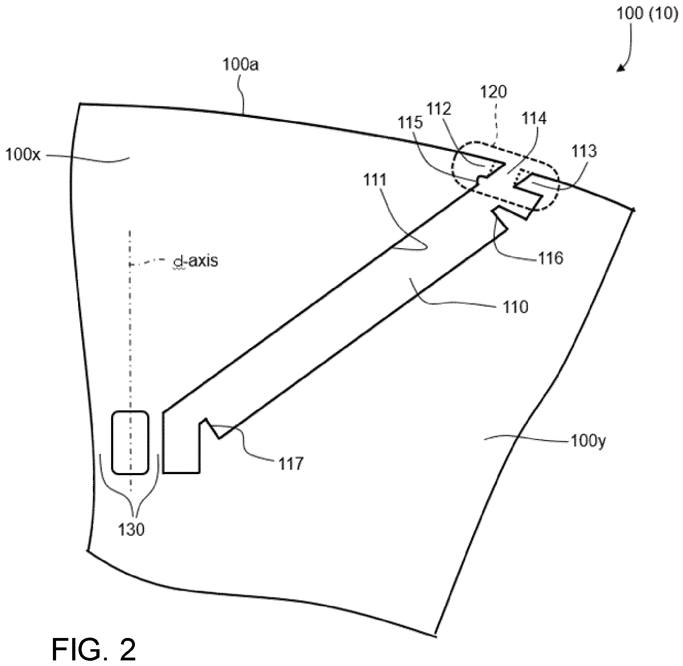

Fig. 2 is a partial transverse sectional view of the rotor core 100 illustrating a permanent magnet housing hole 110 of the interior permanent-magnet rotor 10 according to the first embodiment.

Fig. 2 illustrates one of two permanent magnet housing holes 110 arranged to be symmetric with respect to a center axis (d axis) of each magnetic pole of the rotor core 100. The permanent magnet housing hole 110 faces the other permanent magnet housing hole 110 adjacent via two center bridges 130 on the radially inner side.

Into the permanent magnet housing hole 110, a magnet holding outer-side projection 116 and a magnet holding inner-side projection 117 project, and the permanent magnet 12 (Fig. 1) is stored and held in a region sandwiched between them.

The radially outer side of the permanent magnet housing hole 110 communicates with the radially outer side of a rotor core outer circumferential surface 100a. In other words, at a radially outer side portion of the permanent magnet housing hole 110, an opening part 114 is formed.

In the region of one magnetic pole, the rotor core 100 is divided by the two permanent magnet housing holes 110 facing each other into a fan-shaped portion 100x which is a region sandwiched between them and spreads from the two center bridges 130 to the radially outer side, and a magnetic pole outer-side portion 100y which is adjacent to the circumferential outer side of the fan-shaped portion 100x.

The opening part 114 is formed by two walls facing each other such as an opening-part circumferentially inner-side tip 112 which is a projecting portion on the fan-shaped portion 100x side, and an opening-part circumferentially outer-side tip 113 which is a projecting portion on the magnetic pole outer-side portion 100y side.

The opening-part circumferentially inner-side tip 112 is a radially outer side portion via a recessed portion 115 when viewed from a through hole radially outer-side wall 111.

The opening-part circumferentially outer-side tip 113 is a projecting portion on the radially outer side when viewed from the magnet holding outer-side projection 116.

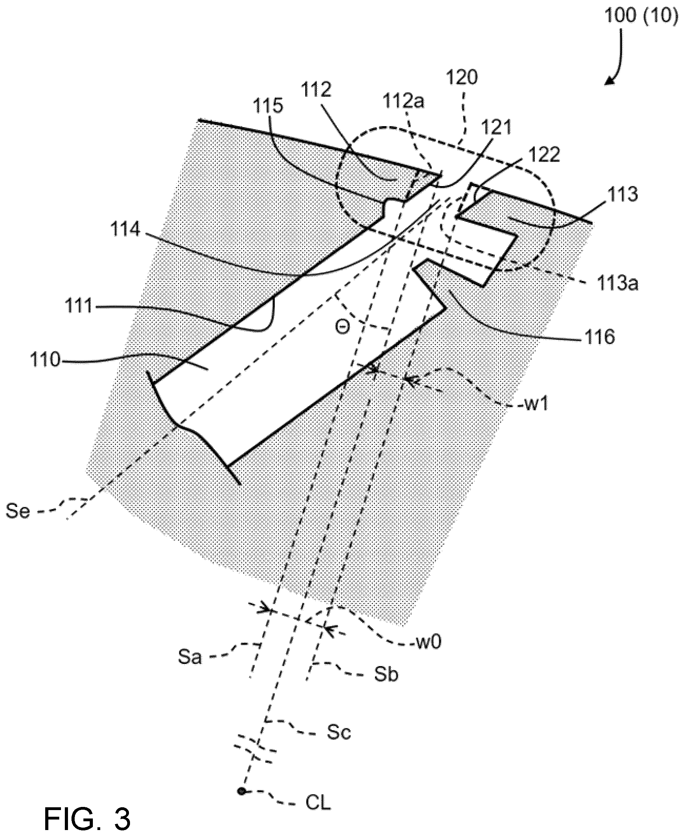

A relaxing part 120 relaxes a rapid change in the circumferential direction in magnetic reluctance with respect to a magnetic flux penetrating into the rotor core 100 from the radially outer side of the rotor core 100. Therefore, the opening-part circumferentially inner-side tip 112 and the opening-part circumferentially outer-side tip 113 forming the opening part 114 are formed in such shapes that relax the circumferential change in magnetic reluctance. The details of the relaxing part 120 will be explained later with reference to Fig. 3.

Fig. 3 is a partial transverse sectional view illustrating the relaxing part 120 of the permanent magnet housing hole 110 of the interior permanent-magnet rotor 10 according to the first embodiment.

A broken line illustrates a conventional example, as a comparative example for explaining the details and effect of the relaxing part 120 of the permanent magnet housing hole 110 according to this embodiment. In the comparative example, an inner-side tip facing wall 112a of the opening-part circumferentially inner-side tip 112 being the projecting portion on the fan-shaped portion 100x side and an outer-side tip facing wall 113a of the opening-part circumferentially outer-side tip 113 being the projecting portion on the magnetic pole outer-side portion 100y side facing it, which form the opening part 114 are included in a plane Sa and a plane Sb extending in the axial direction, respectively. The plane Sa and the plane Sb are parallel to each other. A virtual plane Sc located at an intermediate position between them in the circumferential direction is a plane passing through the rotation axis CL of the rotor shaft 11.

On the other hand, an inner-side tip extension wall 121 being a facing surface in the opening-part circumferentially inner-side tip 112 of the relaxing part 120 according to this embodiment is formed to exist within the same plane as the through hole radially outer-side wall 111. Specifically, the inner-side tip extension wall 121 is formed to project at the radially outer side into the opening part 114 more than the inner-side tip facing wall 112a in the comparative example.

On the other hand, an outer-side tip facing wall 122 being a facing surface of the opening-part circumferentially outer-side tip 113 is formed to be parallel to the inner-side tip extension wall 121 being a facing surface of the opening-part circumferentially inner-side tip 112. Specifically, the comparative example is formed so as to maintain the circumferential width of the opening part 114 in the comparative example, namely, a width w0 as an interval between the inner-side tip facing wall 112a and the outer-side tip facing wall 113a. Accordingly, the outer-side tip facing wall 122 is formed to retreat at the radially outer side from the opening part 114 more than the outer-side tip facing wall 113a in the comparative example.

Here, assuming a virtual plane Se passing through the center of the opening part and parallel to the inner-side tip extension wall 121 and the outer-side tip facing wall 122, the virtual plane Se is inclined at an angle θ with respect to the virtual plane Sc.

As explained above, in the comparative example, the inner-side tip facing wall 112a and the outer-side tip facing wall 113a are formed almost along the radial direction, and therefore formed so that the width of the opening part 114 is w0 when viewed in the direction of the rotation axis CL from the stator 20 on the radially outer side, and the opening part 114 can be viewed with the width w0 along the radial direction.

On the other hand, the relaxing part 120 according to this embodiment is formed with the inner-side tip extension wall 121 and the outer-side tip facing wall 122, and therefore the width of the opening part 114 when the opening part 114 is viewed in the direction of the rotation axis CL along the radial direction decreases to w1 (= w0 · cosθ) when viewed from the stator 20 on the radially outer side. Further, the thicknesses of the opening-part circumferentially inner-side tip 112 and the opening-part circumferentially outer-side tip 113 located on both sides of w1 with which the opening part 114 can be viewed along the radial direction when viewing from the stator 20 on the radially outer side continuously decreases as coming closer to the opening part 114.

Next, the operation and effect of the interior permanent-magnet rotor 10 according to the above-explained embodiment will be explained.

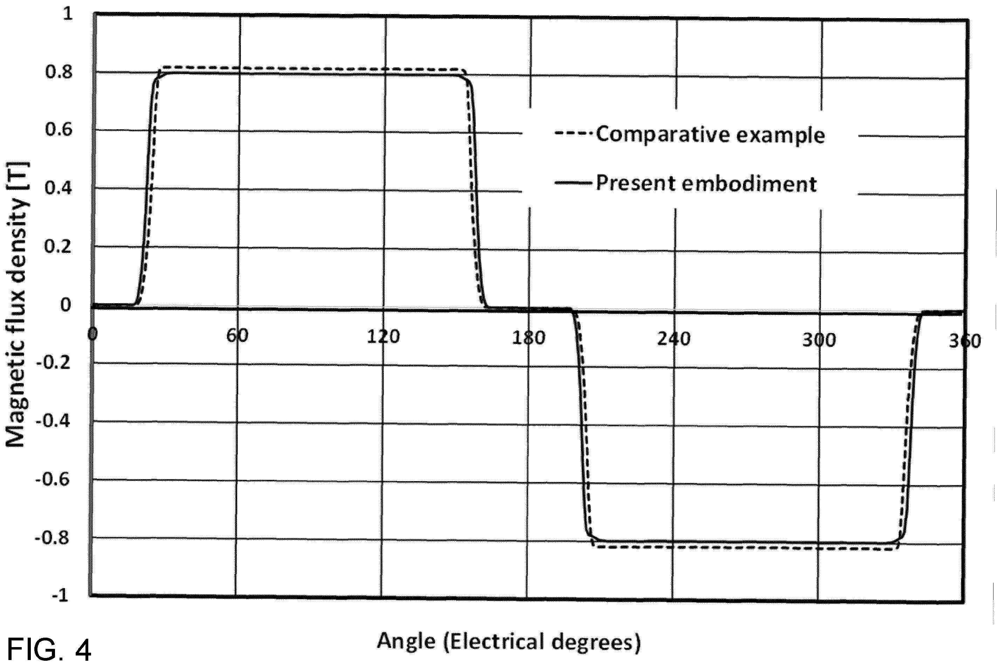

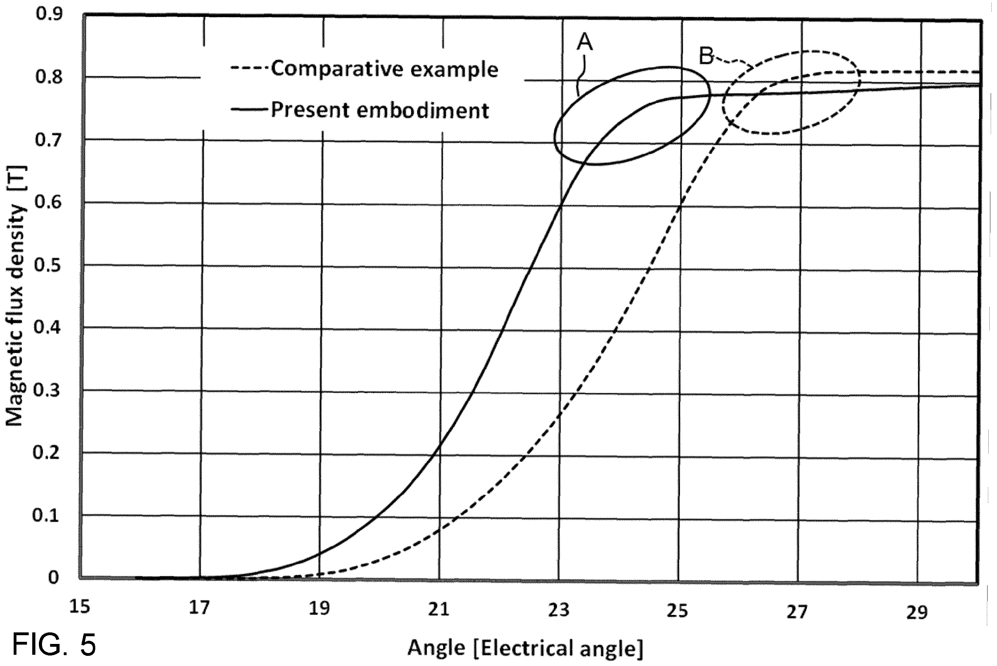

Fig. 4 is a graph illustrating the comparison of temporal changes in magnetic flux density showing the effect of the interior permanent-magnet rotor 10 according to the first embodiment. Besides, Fig. 5 is a graph illustrating the comparison of details of the temporal changes in magnetic flux density showing the effect of the interior permanent-magnet rotor 10 according to the first embodiment. The horizontal axis in Fig. 4 and Fig. 5 is an angle (electrical angle) and the vertical axis is a magnetic flux density [T]. Further, a broken line represents the case of the comparative example and a solid line represents the case of this embodiment.

For example, the appearances of the changes at a C part between before and after the magnetic flux density increases and reaches the maximum value in Fig. 4 are compared in more detail by Fig. 5. As illustrated in Fig. 5, the change in the case of this embodiment illustrated at an A part is gentler than the change in the case of the comparative example illustrated at a B part.

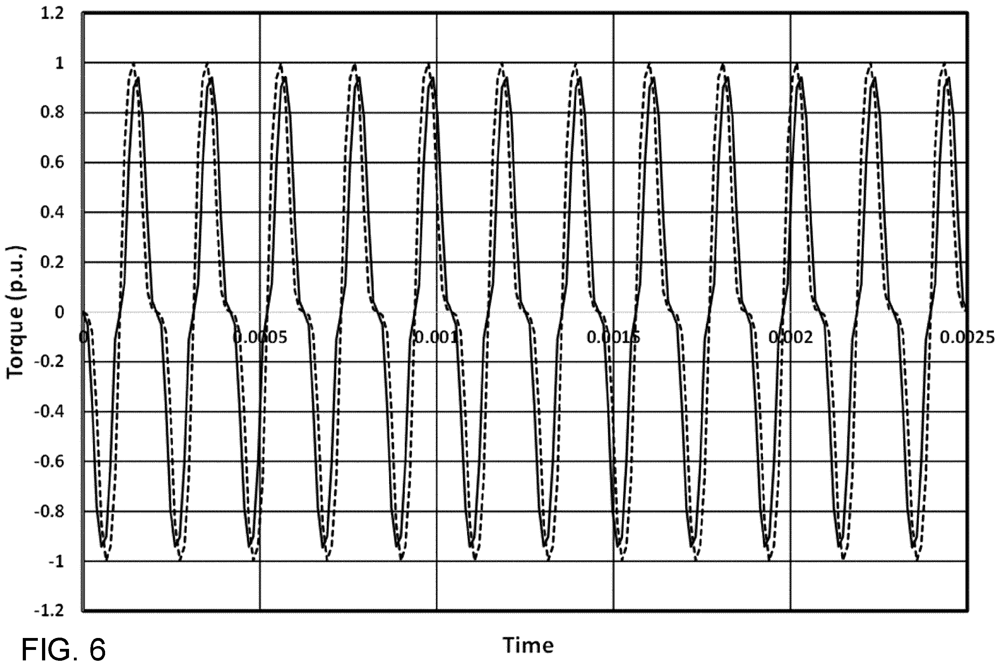

Fig. 6 is a graph illustrating the comparison of temporal changes in torque showing the effect of the interior permanent-magnet rotor 10 according to the first embodiment. The horizontal axis is time and the vertical axis is torque (p.u.).

A broken line represents the case of the comparative example and a solid line represents the case of this embodiment. As illustrated in Fig. 6, the change in each cycle is larger in the comparative example than in the case of this embodiment.

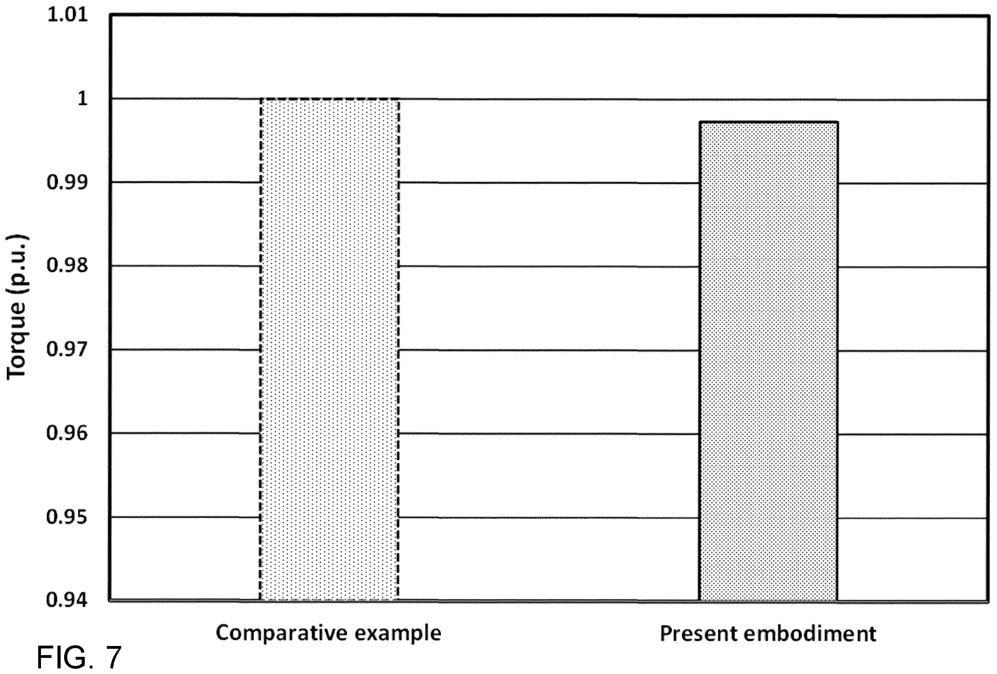

Fig. 7 is a graph illustrating the comparison of magnitudes of torque showing the effect of the interior permanent-magnet rotor 10 according to the first embodiment. The horizontal axis is a case, namely, the case of the comparative example and the case of this embodiment. The vertical axis is a relative value of a time average of torque. The torque value in this embodiment is lower than the torque value in the case of the comparative example, but its decrement remains below about 0.3%.

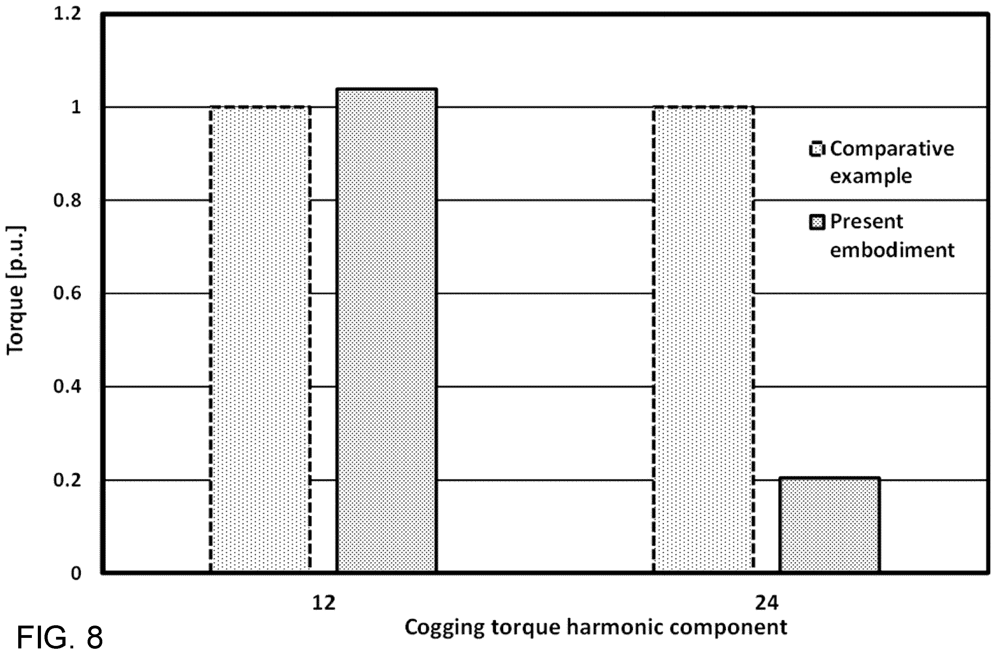

Fig. 8 is a graph illustrating the comparison of magnitudes of a cogging torque harmonic component showing the effect of the interior permanent-magnet rotor 10 according to the first embodiment. The horizontal axis is a case, namely, cases of a 12th harmonic and a 24th harmonic significantly appearing as the cogging torque harmonic component. The vertical axis is a relative value of the amplitude value of torque.

As illustrated in Fig. 8, the cogging torque harmonic component increases by about 4% in the 12th harmonic but decreases by about 80% in the 24th harmonic in the case of this embodiment as compared with the comparative example, and the harmonic suppression effect is obtained as a whole.

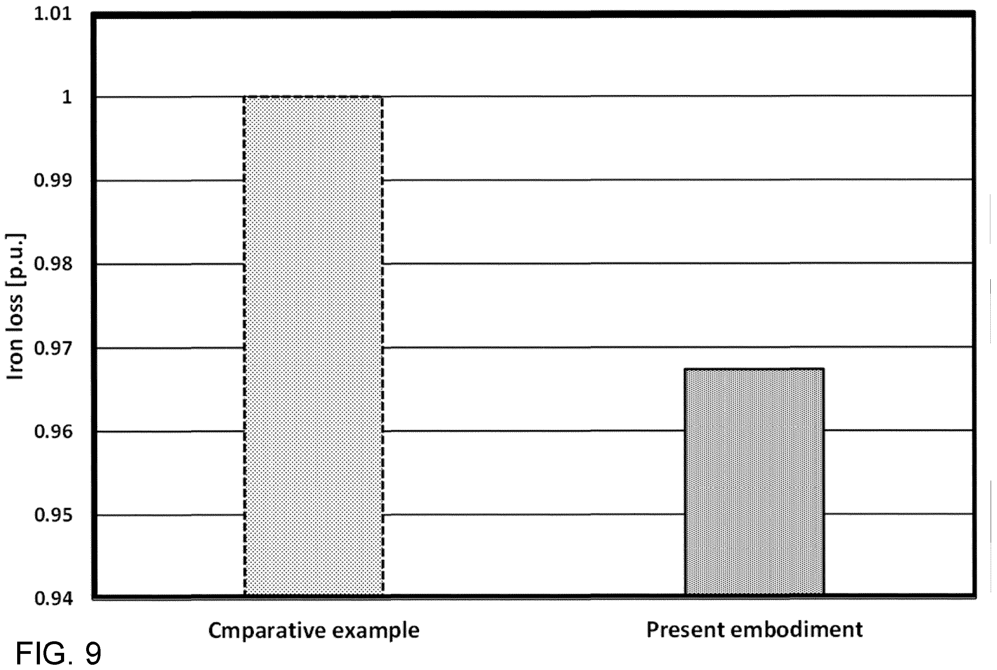

Fig. 9 is a graph illustrating the comparison of magnitudes of an iron loss showing the effect of the interior permanent-magnet rotor 10 according to the first embodiment. The horizontal axis is a case, namely, the case of the comparative example and the case of this embodiment. The vertical axis is a relative value of the iron loss.

As illustrated in Fig. 9, the iron loss decreases by about 3% in the case of this embodiment as compared with the comparative example.

As explained above, by providing the inner-side tip extension wall 121 and the outer-side tip facing wall 122 in the relaxing part 120 in this embodiment, the width of the opening part 114 when viewed from the stator 20 on the radially outer side decreases. Further, the thicknesses of the opening-part circumferentially inner-side tip 112 and the opening-part circumferentially outer-side tip 113 on both sides of a width w1 with which the opening part 114 can be viewed along the radial direction continuously decreases as coming closer to the opening part. As a results of these, a rapid change in the circumferential direction in magnetic reluctance with respect to the magnetic flux penetrating into the rotor core 100 from the radially outer side of the rotor core 100 is relaxed.

As a result of this, it is possible to suppress the cogging torque due to the existence of the opening part 114 formed in the rotor core 100 and also decrease the iron loss, thereby improving the efficiency.

### [Second Embodiment]

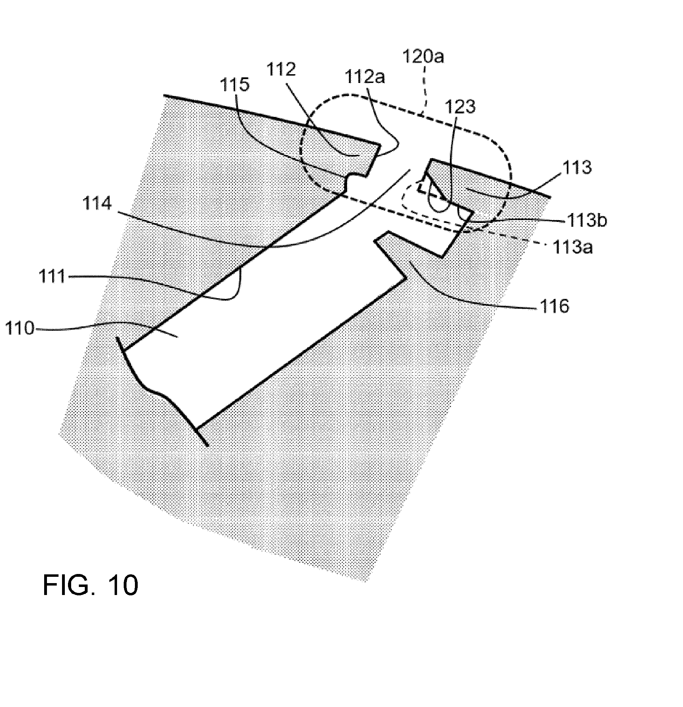

Fig. 10 is a partial transverse sectional view illustrating a relaxing part 120a of the permanent magnet housing hole 110 of the interior permanent-magnet rotor 10 according to a second embodiment. This embodiment is a modification of the first embodiment and is different only in shape of the relaxing part 120a.

The relaxing part 120a in this embodiment is similar to the comparative example regarding the inner-side tip facing wall 112a of the opening-part circumferentially inner-side tip 112. On the other hand, an outer-side tip inner wall 113b of the opening-part circumferentially outer-side tip 113 is formed with an outer-side tip inner surface inclined wall 123, so that the thickness in the radial direction of the opening-part circumferentially outer-side tip 113 continuously decreases as coming closer to the opening part 114. Note that an inner-side tip inner surface inclined wall may be provided at an inner-side tip inner wall of the opening-part circumferentially inner-side tip 112.

As explained above, in this embodiment, only by cutting out a part of the opening-part circumferentially outer-side tip 113 in the comparative example, the rapid change in the circumferential direction in magnetic reluctance with respect to the magnetic flux penetrating into the rotor core 100 from the radially outer side of the rotor core 100 is relaxed.

### [Third Embodiment]

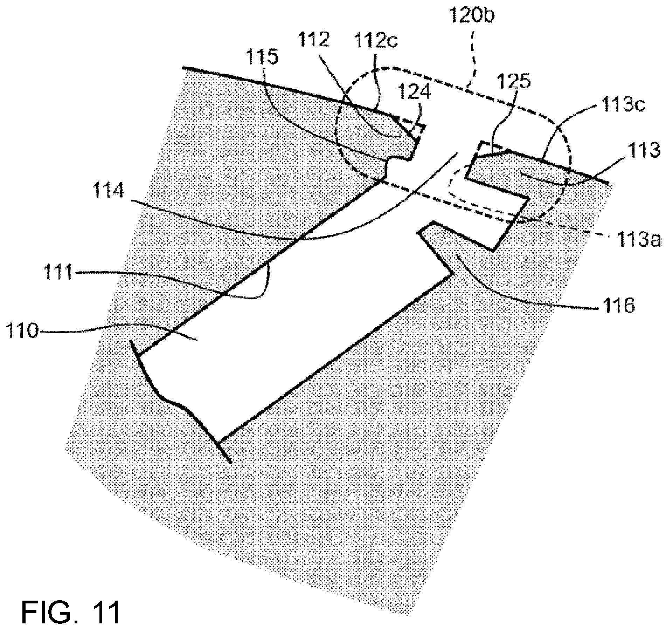

Fig. 11 is a partial transverse sectional view illustrating a relaxing part 120b of the permanent magnet housing hole 110 of the interior permanent-magnet rotor 10 according to a third embodiment. This embodiment is a modification of the first embodiment and is different only in shape of the relaxing part 120b.

In the relaxing part 120b in this embodiment, an inner-side tip outer wall 112c of the opening-part circumferentially inner-side tip 112 is formed with the inner-side tip outer surface inclined wall 124. Further, an outer-side tip outer wall 113c of the opening-part circumferentially outer-side tip 113 is formed with an outer-side tip outer surface inclined wall 125. As a result of this, the thicknesses in the radial direction of the opening-part circumferentially inner-side tip 112 and the opening-part circumferentially outer-side tip 113 continuously decrease as coming closer to the opening part 114. Note that either the inner-side tip outer surface inclined wall 124 or the outer-side tip outer surface inclined wall 125 may be formed.

As explained above, in this embodiment, only by cutting out parts of the opening-part circumferentially inner-side tip 112 and the opening-part circumferentially outer-side tip 113 in the comparative example, the rapid change in the circumferential direction in magnetic reluctance with respect to the magnetic flux penetrating into the rotor core 100 from the radially outer side of the rotor core 100 is relaxed.

### [Fourth Embodiment]

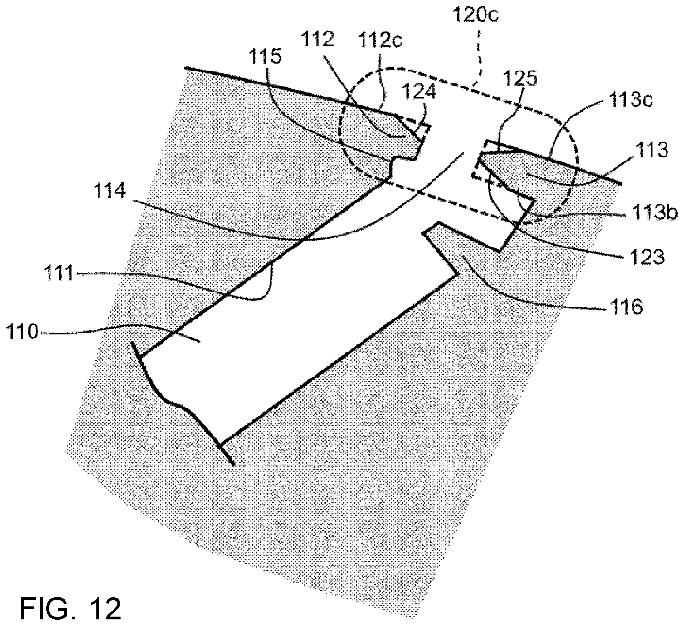

Fig. 12 is a partial transverse sectional view illustrating a relaxing part 120c of the permanent magnet housing hole 110 of the interior permanent-magnet rotor 10 according to a fourth embodiment. This embodiment is a combination of the second embodiment and the third embodiment and is different only in shape of the relaxing part 120c.

In the relaxing part 120c in this embodiment, the inner-side tip outer wall 112c of the opening-part circumferentially inner-side tip 112 is formed with an inner-side tip outer surface inclined wall 124. Further, the outer-side tip inner wall 113b of the opening-part circumferentially outer-side tip 113 is formed with the outer-side tip inner surface inclined wall 123, and the outer-side tip outer wall 113c is formed with the outer-side tip outer surface inclined wall 125. As a result of this, the thicknesses in the radial direction of the opening-part circumferentially inner-side tip 112 and the opening-part circumferentially outer-side tip 113 continuously decrease as coming closer to the opening part 114.

As explained above, in this embodiment, only by cutting out parts of the opening-part circumferentially inner-side tip 112 and the opening-part circumferentially outer-side tip 113 in the comparative example, the rapid change in the circumferential direction in magnetic reluctance with respect to the magnetic flux penetrating into the rotor core 100 from the radially outer side of the rotor core 100 is relaxed.

According to the above-explained embodiments, it is possible to provide an interior permanent-magnet rotor and an interior permanent-magnet rotating electric machine capable of decreasing the change in magnetic reluctance to reduce cogging torque.

### [Other Embodiments]

While certain embodiments of the present invention have been described above, these embodiments have been presented by way of example only, and are not intended to limit the scope of the invention. Further, characteristics of the embodiments may be combined. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

### EXPLANATION OF REFERENCE SIGNS

1...permanent magnet rotating electric machine, 10...permanent magnet rotor, 11... rotor shaft, 12...permanent magnet, 20...stator, 21...stator core, 22...stator slot, 100...rotor core, 100a...rotor core outer circumferential surface, 100x...fan-shaped portion, 100y...magnetic pole outer-side portion, 110... permanent magnet housing hole, 111...through hole radially outer-side wall, 112...opening-part circumferentially inner-side tip, 112a...inner-side tip facing wall, 112b...inner-side tip inner wall, 112c...inner-side tip outer wall, 113...opening-part circumferentially outer-side tip, 113a...outer-side tip facing wall, 113b...outer-side tip inner wall, 113c... outer-side tip outer wall, 114... opening part, 115...recessed portion, 116...magnet holding outer-side projection, 117...magnet holding inner-side projection, 120, 120a, 120b, 120c...relaxing part, 121...inner-side tip extension wall, 122...outer-side tip facing wall, 123...outer-side tip inner surface inclined wall, 124...inner-side tip outer surface inclined wall, 125...outer-side tip outer surface inclined wall, 130...center bridge, CL...rotation axis

## Claims

1. An interior permanent-magnet rotor comprising:
a rotor shaft extending in a direction of a rotation axis;
a plurality of permanent magnets at least one of which is provided at each magnetic pole; and
a rotor core attached to a radially outer side of the rotor shaft and formed with a plurality of permanent magnet housing holes for storing the plurality of permanent magnets, respectively, wherein:
each of the permanent magnet housing holes has an opening part in communication with a radially outer side of the rotor core and sandwiched between an opening-part circumferentially inner-side tip and an opening-part circumferentially outer-side tip of the rotor core; and
the rotor core has a relaxing part formed with shapes of the opening-part circumferentially inner-side tip and the opening-part circumferentially outer-side tip to relax a rapid change in a circumferential direction in magnetic reluctance with respect to a magnetic flux penetrating into the rotor core from the radially outer side of the rotor core.

2. The interior permanent-magnet rotor according to claim 1, wherein
a first surface where the opening-part circumferentially inner-side tip faces the opening part and a second surface where the opening-part circumferentially outer-side tip faces the opening part are formed parallel to each other.

3. The interior permanent-magnet rotor according to claim 1, wherein:
the relaxing part has an inner-side tip extension wall where the opening-part circumferentially inner-side tip faces the opening part, and an outer-side tip facing wall where the opening-part circumferentially outer-side tip faces the opening part; and
a virtual plane located at a center between the inner-side tip extension wall and the outer-side tip facing wall is formed to have an angle with respect to a virtual plane including a center of the opening part and the rotation axis.

4. The interior permanent-magnet rotor according to claim 1, wherein
the relaxing part has an outer-side tip inner surface inclined wall formed at an outer-side tip inner wall of the opening-part circumferentially outer-side tip, or an inner-side tip inner surface inclined wall formed at an inner-side tip inner wall of the opening-part circumferentially inner-side tip.

5. The interior permanent-magnet rotor according to claim 1, wherein
the relaxing part has an inner-side tip outer surface inclined wall formed at an inner-side tip outer wall of the opening-part circumferentially inner-side tip, or an outer-side tip outer surface inclined wall formed at an outer-side tip outer wall of the opening-part circumferentially outer-side tip.

6. The interior permanent-magnet rotor according to claim 1, wherein
the plurality of permanent magnets include two permanent magnets arranged side by side in a circumferential direction and facing each other at each magnetic pole.

7. An interior permanent-magnet rotating electric machine comprising:
the interior permanent-magnet rotor according to any one of claim 1 to claim 6;
a stator having a cylindrical rotor core arranged to surround a radially outer side of the rotor core, and a stator winding passing through an inside of a plurality of stator slots formed on an inner circumferential surface of the stator core and wound around the stator core; and
two bearings supporting the rotor shaft.
